# EUROPÄISCHE PATENTSCHRIFT

(11) **EP 1 496 176 B1**
(45) Veröffentlichungstag und Bekanntmachung des Hinweises auf die Patenterteilung: **13.09.2006**
(21) Anmeldenummer: 04015945.1
(22) Anmeldetag: 07.07.2004
(51) Int. Cl.: E05B 53/00

(54) **Kombiniertes Bowdenzug-/Hebelaggregat**
Combined bowden cable assembly and lever unit
Commande par câble Bowden combiné avec un dispositif de levier

(30) Priorität: 11.07.2003 DE 10331712; 13.08.2003 DE 10337392
(43) Veröffentlichungstag der Anmeldung: 12.01.2005
(73) Patentinhaber: Kiekert Aktiengesellschaft, 42579 Heiligenhaus (DE)
(72) Erfinder: Bendel, Thorsten, Dipl.-Ing., 46149 Oberhausen (DE)

(56) Entgegenhaltungen:
- DE-A- 10 100 636
- DE-A- 10 300 640
- DE-A- 19 620 496
- DE-C- 10 002 215
- FR-A- 1 240 022

## Beschreibung

Die Erfindung betrifft ein kombiniertes Bowdenzug-/Hebelaggregat für insbesondere Kraftfahrzeugtürverschlüsse, mit einem Bowdenzug sowie einer daran angeschlossenen Betätigungselementekette mit erstem, zweiten und drittem Betätigungselement, wobei die Betätigungselementekette drei oder mehr durch einen Arbeitshub des Bowdenzuges bis zur Beaufschlagung eines Auslöse-/Sperrelementes zu überbrückende Spalte aufweist.

Ein derartiges kombiniertes Bowdenzug-/Hebelaggregat ist aus der Praxis bekannt und wird im Übrigen ansatzweise in der DE 100 02 215 C1 beschrieben. Solche Bowdenzug-/Hebelaggregate haben sich grundsätzlich bewährt. Denn sie sind mit dem Vorteil gegenüber Stangenbetätigungen ausgerüstet, dass selbst bei einem Unfall ihre Funktion in weiten Teilen noch gegeben ist, folglich eine Kraftfahrzeugtür dann immer noch geöffnet werden kann.

Auch gewährleisteten Bowdenzug-/Hebelaggregate eine nahezu freie Anbringung einzelner Elemente zueinander, ohne dass komplizierte Kraftübertragungsglieder zwischen den jeweiligen Hebeln zum Einsatz kommen. Das ist von besonderer Bedeutung vor dem Hintergrund, dass der Innenraum von Kraftfahrzeugtüren zunehmend zugebaut wird durch beispielsweise Audiokomponenten wie Lautsprecher, aber auch durch Sicherheitseinrichtungen wie Seitenairbags, Fensterheber etc.. Das heißt, der zur Verfügung stehende Bauraum schrumpft, wobei gleichzeitig nur noch bestimmte Stellen für die Anbringung derartiger Hebel, Bowdenzüge etc. zur Verfügung stehen.

Neben diesen unbestreitbaren Vorteilen von Bowdenzügen sind diese jedoch mit dem Nachteil behaftet, dass sie sich im Betrieb längen. Auch unsachgemäße Beaufschlagung kann zu solchen Längenveränderungen führen. Dabei besteht in letzter Konsequenz und bei ungünstigen Einbaubedingungen die Gefahr, dass das Auslöse-/Sperrelement, bei dem es sich in der Regel um ein Gesperre aus Drehfalle und Sperrklinke handelt, nicht mehr geöffnet werden kann. Das heißt, nach einer langen Bedienzeit und/oder unsachgemäßer Behandlung kann es sein, dass ein Fahrzeugbenutzer beim Ziehen an einem Außenbetätigungshebel nicht mehr den sogenannten Auslösepunkt erreicht, welcher die Sperrklinke zur Öffnung des Gesperres aushebt.

Nun könnte man daran denken, dass Spiel in der Betätigungselementekette gleichsam auf Null zu reduzieren. Das ist jedoch schon deshalb nicht möglich, weil eine solche Vorgehensweise bedeuten würde, dass selbst kleinste Erschütterungen des Kraftfahrzeuges durch die "stramme" Übertragung zum Öffnen des Gesperres korrespondieren könnten. Das will man natürlich unter allen Umständen, insbesondere während der Fahrt, verhindern.

Aus diesem Grund hat es mit der eingangs bereits angegebenen DE 100 02 215 C1 in der Vergangenheit bereits Lösungsansätze gegeben, für eine automatische Längeneinstellung eines Bowdenzuges zu sorgen. Die in diesem Zusammenhang vorgestellte Ausführungsform ist jedoch aufwendig und nur in der Lage, das Spiel zwischen einem Bowdenzug und dem daran unmittelbar angeschlossenen Hebel auszugleichen. Betätigungselementeketten, wie sie in der Regel verwirklicht sind und nicht nur zwei sondern drei oder mehr durch den Arbeitshub des Bowdenzuges zu überbrückende Spalte aufweisen, lassen sich hiermit kaum vernünftig hinsichtlich des akzeptablen Spiels einstellen. Hier will die Erfindung insgesamt Abhilfe schaffen.

Der Erfindung liegt das technische Problem zugrunde, ein kombiniertes Bowdenzug-/Hebelaggregat der eingangs beschriebenen Gattung so weiter zu entwickeln, dass eine Spieleinstellung der gesamten Betätigungselementekette bei einfachem und funktionsgerechtem Aufbau gelingt und ein Spielausgleich auf einfache und funktionsgerechte Weise erreicht wird.

Zur Lösung dieser Aufgabe schlägt die Erfindung bei einem gattungsgemäßen kombinierten Bowdenzug-/Hebelaggregat vor, dass das dritte Betätigungselement im Wesentlichen spielfrei auf das Auslöse-/Sperrelement arbeitet, so dass mittels des ersten Betätigungselementes das noch verbleibende Spiel in der Betätigungskette eingestellt wird.

Die Erfindung geht zunächst einmal von der Erkenntnis aus, dass der Bowdenzug an das erste Betätigungselement angeschlossen ist, welches auf das zweite Betätigungselement arbeitet, das wiederum mit dem dritten Betätigungselement in Wirkverbindung steht, welches seinerseits das Auslöse-/Sperrelement beaufschlagt. Hierbei handelt es sich im Rahmen der bevorzugten Anwendung bei Kraftfahrzeugtürverschlüssen regelmäßig um ein Gesperre aus Sperrklinke und Drehfalle.

Die drei oder mehr durch den Arbeitshub des Bowdenzuges bis zur Beaufschlagung des Auslöse-/Sperrelementes zu überbrückenden Spalte stellen sich also zwischen dem ersten und zweiten Betätigungselement, dem zweiten und dritten Betätigungselement und schließlich dem dritten Betätigungselement und dem Auslöse-/Sperrelement ein. Selbstverständlich sind auch noch mehr Betätigungselemente zur Darstellung der Betätigungselementekette möglich und denkbar. Ebenso mehr als drei zu überbrückende Spalte.

Um die erfindungsgemäße Maßgabe nun im Detail umsetzen zu können, verfügt das dritte Betätigungselement, also dasjenige, welches auf das Auslöse-/Sperrelement arbeitet, über eine endseitige Ummantelung. Hierbei handelt es sich in der Regel um eine Kunststoffummantelung aus vorzugsweise einem thermoplastischen Elastomer. Diese Ummantelung bzw. Kunststoffummantelung findet sich also zwischen dem besagten dritten Betätigungselement und dem Auslöse-/Sperrelement. Durch den elastomeren Charakter der Ummantelung können Fertigungstoleranzen problemlos ausgeglichen werden.

Dabei hat es sich bewährt, wenn das betreffende dritte Betätigungselement endseitig einerseits an einem gehäusefesten Anschlag und andererseits am Auslöse-/Sperrelement anliegt. Das dritte Betätigungselement füllt also - wenn man so will - den zwischen dem Auslöse-/Sperrelement und dem gehäusefesten Anschlag verbleibenden Freiraum, und zwar infolge der endseitigen Ummantelung im Wesentlichen spielfrei. Dabei ist diese Ummantelung in der Lage, Schlag- und Stoßbewegungen auf den Kraftfahrzeugtürverschluss aufzunehmen, ohne dass das Auslöse-/Sperrelement bzw. die an dieser Stelle zumeist beaufschlagte Sperrklinke ausgelöst oder ausgehoben wird. Es kann also nicht zu unbeabsichtigten Öffnungen des Gesperres kommen.

Um einen Spielausgleich während des Betriebes vornehmen zu können, ist wenigstens ein Betätigungselement der Betätigungselementekette zum Spielausgleich für den Bowdenzug nach einer Grundeinstellung so ausgebildet, dass das betreffende Betätigungselement seine Kontur verändert. In der Regel ist das erste und mit dem Bowdenzug verbundene Betätigungselement entsprechend ausgerüstet. Damit ist gemeint, dass der Abstand zwischen einem Befestigungspunkt für die Bowdenzugseele und einen Anschlag für die Bowdenzughülle verändert werden kann, und zwar automatisch. Das erreicht das die Kontur ändernde Betätigungselement.

Die Änderung der Kontur des Betätigungselementes lässt sich beispielsweise so denken, dass dieser von einem mehr oder minder gestreckten Verlauf im Anlieferungszustand ausgehend eine zunehmende Krümmung erfährt. Dabei kann das Betätigungselement einteilig ausgeführt sein, in der Regel ist das betreffende Betätigungselement aus zwei Teilen, Schlossarm mit Bowdenzugarm zusammengesetzt, die drehgelenkig über eine Drehachse miteinander verbunden sind und im Zuge des automatischen Spielausgleichs ihren eingeschlossenen Winkel zueinander (per Federkraft) verändern. Dabei wird von der Erkenntnis ausgegangen, dass sich ein Bowdenzug und insbesondere die Bowdenzugseele im Betrieb längt. Solche Längungen werden nun dadurch beherrscht, dass der Befestigungspunkt für die Bowdenzugseele am Betätigungselement von dem Anschlag für die Bowdenzughülle entfernt wird.

Der Bowdenzugarm mag über eine Nase verfügen, welche in Verbindung mit einem je nach Winkelstellung der beiden Arme zueinander verstellbaren Gegenelement zusammenwirkt. Nase und Gegenelement sorgen für die Kraftübertragung vom Bowdenzug auf ein Gesperre oder einen vergleichbaren Ausgangsmechanismus.

Die Nase kann zum diskreten Spielausgleich mit einer stufenförmigen Kontur versehen sein. Das Gegenelement kann als in dem Schlossarm verschiebbar gelagerte Kugel mit gegebenenfalls angeschlossener Führungsspitze ausgeführt sein. Dabei stellt die Kugelform des Gegenelementes sicher, dass die Nase auch bei unterschiedlichen Stellungen des Gegenelementes im Schlossarm durchgängig auf eine vergleichbar große Angriffsfläche trifft. Dadurch werden die Betätigungskräfte beibehalten, und zwar unabhängig von der Winkelstellung der beiden Arme (Schlossarm und Bowdenzugarm) zueinander.

Das Gegenelement kann auch als in dem Schlossarm geführte Kontur eines drehbar gelagerten Hebels ausgeführt sein. Das Gegenelement wirkt mit einer Führungskontur am Bowdenzugarm zusammen. Die Führungskontur gibt (ggf. durch die Führungsspitze) insgesamt die Position des Gegenelementes im Schlossarm vor. Je nach Winkelstellung der beiden Arme zueinander verändert die betreffende Kontur im Bowdenzugarm (über die Führungsspitze) die Position des Gegenelementes. Dabei ist in allen Fällen sichergestellt, dass innerhalb des Verstellweges der beiden Arme zueinander die Nase über das Gegenelement für die erforderliche Kraftübertragung vom Bowdenzug auf das Gesperre oder den Ausgangsmechanismus sorgt.

Ein oder mehrere Anschläge für den Betätigungshebel stellen sicher, dass keine übermäßigen Winkel zwischen dem Schlossarm und dem Bowdenzugarm vorliegen bzw. sich diese Winkel im zulässigen Bereich bewegen. Dieser zulässige Bereich ist dadurch gekennzeichnet, dass die Nase des Bowdenzugarmes am Gegenelement des Schlossarmes zur Anlage kommt.

Darüber hinaus schlägt die Erfindung vor, einem oder mehreren Betätigungselementen eine Verstelleinheit zuzuordnen. Diese Verstelleinheit mag als Nocken ausgeführt sein, welcher im Falle des die Kontur ändernden Betätigungselementes dafür sorgt, dass die betreffende Konturänderung - vorliegend eine Änderung der Winkelstellung der beiden Arme zueinander - vorgenommen wird. Ebenso kann die Verstelleinheit dafür sorgen, dass das von ihr beaufschlagte Betätigungselement eine Verschwenkung oder allgemein Beaufschlagung in der Weise erfährt, dass eine Spielreduzierung des Spaltes zum nächsten Betätigungselement vorgenommen wird.

In der Regel ist das erste Betätigungselement als Außenbetätigungshebel oder Innenbetätigungshebel ausgebildet, kann jedoch auch ein beliebiger Aktuator sein, während das zweite Betätigungselement die Funktion eines Betätigungshaupthebels mit gegebenenfalls Kupplungshebel übernimmt. Bei dem dritten Betätigungselement handelt es sich schließlich um einen Auslösehebel für ein Gesperre aus Drehfalle und Sperrklinke, welches die Funktion des Auslöse-/Sperrelementes übernimmt.

Im Ergebnis wird ein kombiniertes Bowdenzug-/Hebelaggregat zur Verfügung gestellt, welches eine einfache und funktionssichere Spieleinstellung und einen wirksamen Spielausgleich einer angeschlossenen Betätigungselementekette zur Verfügung stellt. Tatsächlich lässt sich das Spiel dieser mit wenigstens drei zu überbrückenden Spalten ausgerüsteten Betätigungselementekette letztlich auf einen verbleibenden Spalt reduzieren. Dabei geht die Erfindung von der Erkenntnis aus, dass das dritte Betätigungselement im Wesentlichen spielfrei auf das Auslöse-/Sperrelement arbeitet, wohingegen das erste Betätigungselement an das zweite Betätigungselement angelegt werden kann, so dass sich durch diese zusammengenommenen Maßnahmen der noch verbleibende Spalt zwischen dem zweiten Betätigungselement und dem dritten Betätigungselement unschwer einstellen lässt. Dieser noch verbleibende Spalt stellt das verbleibende Spiel in der Betätigungskette dar, welches erfindungsgemäß durch die beschriebene Prozedur vorgegeben wird.

Dadurch kann das Spiel in der Betätigungselementekette drastisch reduziert werden, und zwar um ca. zwei Drittel oder mehr gegenüber dem Stand der Technik. Daraus resultierend sind Unzuträglichkeiten, wie sie einleitend beschrieben worden sind, nicht mehr zu befürchten. Das heißt, selbst nach einer langen Stand- und Betriebszeit und sogar unsachgemäßer Bedienung gelingt es, mit Hilfe eines Aktuators eine Funktion, z. B. Öffnen, Zuziehen oder Ansteuern sicher vorzunehmen, beispielsweise ein angeschlossenes Gesperre einwandfrei zu öffnen. Das gilt erst recht, wenn auf die optionale Verstelleinheit und/oder das seine Kontur verändernde Betätigungselement zurückgegriffen wird, die beide federunterstützt im Betrieb für einen automatischen Spielausgleich bei einem auf Grund von Setzung und Verschleiß vergrößertem Spiel gegenüber dem Bowdenzugmantel sorgen. Hierin sind die wesentlichen Vorteile der Erfindung zu sehen.

Im Folgenden wird die Erfindung anhand von Ausführungsbeispiele darstellenden Zeichnungen näher erläutert; es zeigen:

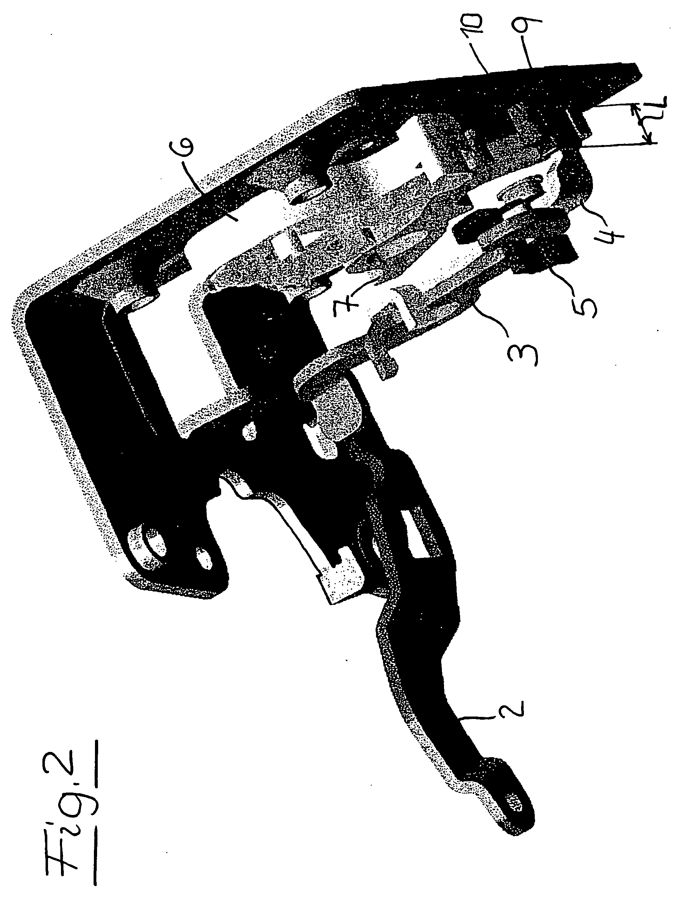

- **Fig. 1 und 2**: perspektivische Ansichten des kombinierten Bowdenzug-/Hebelaggregates in Verbindung mit einem Kraftfahrzeugtürverschluss,
- **Fig. 3 und 4**: den Gegenstand nach den Fig. 1 und 2 in schematischer Seitenansicht und zum Teil abgewandelter Ausführungsform,
- **Fig. 5**: einen Teil des kombinierten Bowdenzug/Hebelaggregates in schematischer vereinfachter Darstellung im Anlieferungszustand,
- **Fig. 6**: den Gegenstand nach Fig. 5 im Betrieb bzw. im Arbeitszustand mit automatisch arbeitendem Spielausgleich,
- **Fig. 7**: eine zweite Ausführungsform eines Teils des kombinierten Bowdenzug-/Hebelaggregates in schematischer vereinfachter Darstellung im Anlieferungszustand,
- **Fig. 8**: den Gegenstand nach Fig. 7 im Betrieb bzw. im Arbeitszustand mit automatisch arbeitendem Spielausleich und
- **Fig. 9**: eine dritte Ausführungsform eines Teils des kombinierten Bowdenzug-/Hebelaggregates in schematischer vereinfachter Darstellung im Anlieferungszustand.

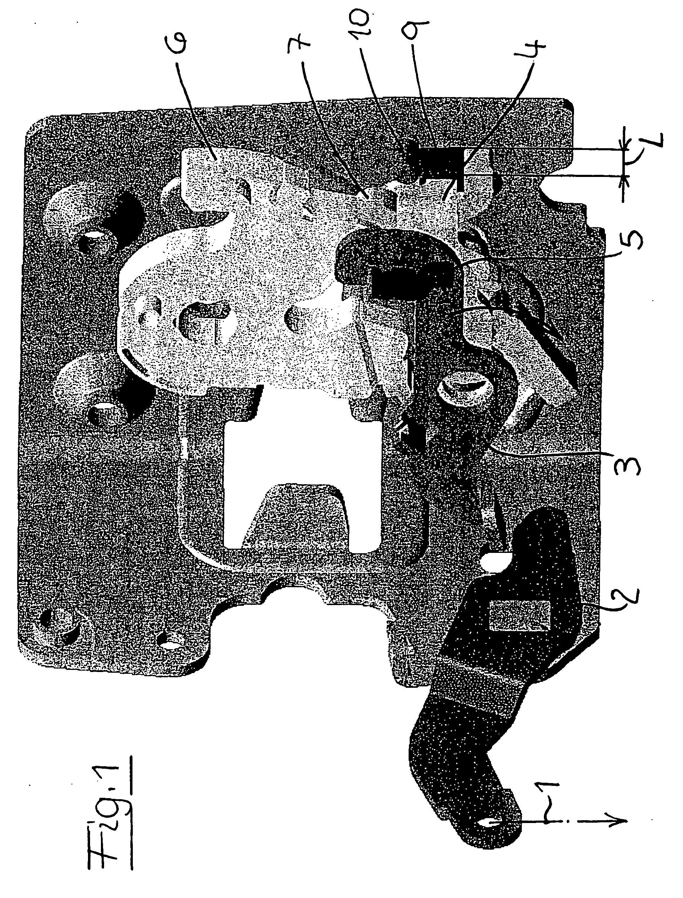

In den Figuren ist ein kombiniertes Bowdenzug-/Hebelaggregat für Kraftfahrzeugtürverschlüsse dargestellt. Dieses verfügt über einen in den Fig. 1, 3 und 4 angedeuteten Bowdenzug 1 sowie eine an den Bowdenzug 1 angeschlossene Betätigungselementekette 2, 3, 4, 5. Die Betätigungselementekette 2, 3, 4, 5 setzt sich im Rahmen des Ausführungsbeispiels aus einem Betätigungshebel 2 in Form eines Außenbetätigungshebels 2, einem Betätigungshaupthebel 3 sowie im Wesentlichen einem Auslösehebel 4 zusammen, der auf ein Auslöse-/Sperrelement 6, 7 in Gestalt eines Gesperres aus Drehfalle 6 und Sperrklinke 7 arbeitet.

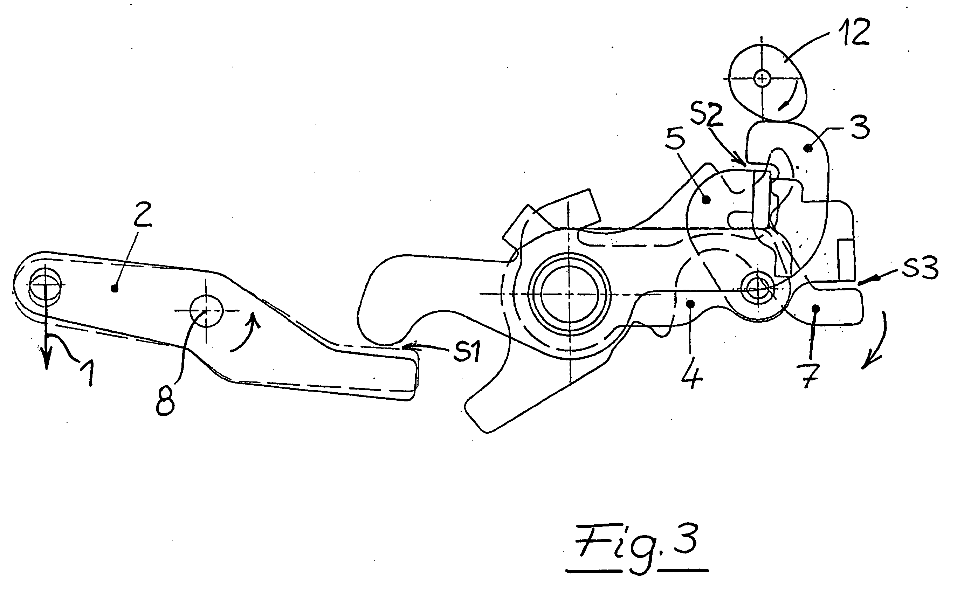

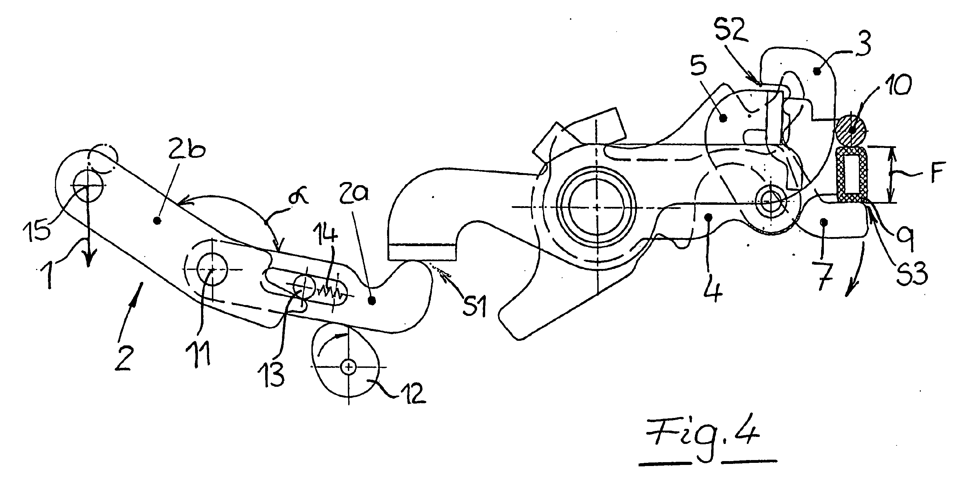

Zusätzlich ist noch ein Kupplungshebel 5 realisiert, welcher den Betätigungshaupthebel 3 mit dem Außenbetätigungshebel 2 und einem nicht dargestellten Innenbetätigungshebel koppelt, um die Funktion "Kindersicherung aus" darzustellen. Ist dagegen die Stellung "Kindersicherung ein" gewünscht, so sorgt der Kupplungshebel 5 dafür, dass lediglich der Außenbetätigungshebel 2 auf den Betätigungshaupthebel 3 einwirken kann, wobei der Betätigungshaupthebel 3 in beiden Fällen den Auslösehebel 4 zum Öffnen des Gesperres 6, 7 in der Weise beaufschlagt, dass beide Hebel 3, 4 die in Fig. 1 angedeutete Uhrzeigersinnbewegung vollführen. Dadurch vollzieht auch die Sperrklinke 7 in den Darstellungen nach Fig. 3 und Fig. 4 eine Uhrzeigersinnbewegung, so dass die Drehfalle 6 federunterstützt freikommen kann.

Für die Erfindung von besonderer Bedeutung ist der Umstand, dass die Betätigungselementekette 2, 3, 4, 5 im Rahmen des Ausführungsbeispiels drei zu überbrückende Spalte S1, S2 und S3 aufweist. Diese Spalte S1, S2 und S3 müssen von dem Bowdenzug 1 überwunden werden, bevor überhaupt die Sperrklinke 7 die in der Fig. 3 durch einen Pfeil dargestellte und die Drehfalle 6 auslösende Bewegung im Uhrzeigersinn beginnt. Das geschieht durch einen entsprechenden Arbeitshub des Bowdenzuges, welcher entsprechend den Darstellungen in den Fig. 3 und 4 mit einem nach unten gerichteten Pfeil verbunden ist, so dass das erste Betätigungselement 2 bzw. der Außenbetätigungshebel 2 eine angedeutete Gegenuhrzeigersinnbewegung um seine Achse 8 vollzieht.

Um nun das sich aus den Spalten S1, S2 und S3 insgesamt zu überwindende Spiel zu minimieren, schlägt die Erfindung im Wesentlichen zwei Maßnahmen vor. Zunächst einmal wird das dritte Betätigungselement 4 bzw. der Auslösehebel 4 so eingerichtet, dass er im Wesentlichen spielfrei auf das Auslöse-/Sperrelement 6, 7 bzw. das Gesperre 6, 7 arbeitet. Dadurch kann mittels des ersten Betätigungselementes bzw. des Außenbetätigungshebels 2 das noch verbleibende Spiel in der Betätigungselementekette 2, 3, 4, 5 eingestellt werden, welches sich im Idealfall auf den Spalt S2 reduziert. Zu diesem Zweck verfügt das dritte Betätigungselement bzw. der Auslösehebel 4 über eine endseitige Ummantelung 9, die man insbesondere in den Fig. 1 und 4 erkennen kann.

Bei dieser Ummantelung 9 handelt es sich um eine Kunststoffummantelung 9, die über eine bestimmte Länge L auf den Auslösehebel 4 endseitig aufgebracht ist, und zwar in dem Bereich, in welchem der Auslösehebel 4 auf die Sperrklinke 7 bzw. das Auslöse-/Sperrelement 6, 7 arbeitet. Die Ummantelung bzw. Kunststoffummantelung 9 ist aus einem thermoplastischen Elastomer hergestellt und kann auf diese Weise etwaige Stöße auf den Kraftfahrzeugtürverschluss aufnehmen, ohne dass die Sperrklinke 7 ausgelöst wird.

Mit der Kunststoffummantelung 9 bzw. dem Auslösehebel 4 wirkt ein gehäusefester Anschlag 10 zusammen. Dabei sind die Ummantelung 9 und der Auslösehebel 4 in diesem Bereich, das heißt zwischen der Sperrklinke 7 und dem gehäusefesten Anschlag 10 so ausgelegt, dass sie zusammengenommen einen ohne den Eingriff des Hebels 4 vorhandenen Freiraum F ausfüllen, und zwar im Wesentlichen spielfrei.

Im Rahmen der Erfindung wird nun als zweite Maßnahme ergänzend so vorgegangen, dass der Bowdenzug 1 so eingestellt wird, dass das erste Betätigungselement bzw. der Außenbetätigungshebel 2 an das zweite Betätigungselement bzw. den Betätigungshaupthebel 3 angelegt wird, wie dies die Fig. 3 mit der strichpunktierten Darstellung des Außenbetätigungshebels 2 andeutet. In diesem Fall sind die beiden Spalte S1 und S3 gleichsam spielfrei und quasi auf Null eingestellt und das Spiel der Betätigungselementekette 2, 3, 4, 5 bemisst sich insgesamt anhand der Größe des noch verbleibenden Spaltes S2, welcher auf diese Weise vorgegeben werden kann. Das geschieht während der Grundeinstellung des kombinierten Bowdenzug-/Hebelaggregates.

Um nun im Betrieb etwaige Längungen des Bowdenzuges 1 ausgleichen zu können, sieht eine abgewandelte Ausführungsform der Erfindung entsprechend der Fig. 4 vor, dass wenigstens ein Betätigungselement 2, 3, 4, im Ausführungsbeispiel das erste Betätigungselement 2 der Betätigungselementekette 2, 3, 4, 5, zum Spielausgleich für den Bowdenzug 1 nach einer Grundeinstellung seine Kontur verändert. Zu diesem Zweck ist das betreffende Betätigungselement 2 ein Betätigungshebel 2 bzw. der Außenbetätigungshebel 2 zweiteilig mit einem Schlossarm 2a und einem Bowdenzugarm 2b ausgebildet. Beide Arme 2a, 2b sind drehgelenkig über eine Drehachse 11 miteinander verbunden.

Für einen Spielausgleich sorgt eine Verstelleinheit 12 in Gestalt eines Nockens, die einen zwischen den beiden Armen 2a, 2b eingeschlossenen Winkel α verändert. Dieser Winkel α lässt sich für einen automatischen Spielausgleich auch mit Hilfe einer Kugel oder eines anderen Verstell-elementes 13 variieren, und zwar beaufschlagt von einer Feder 14.

Jedenfalls ist der Betätigungshebel 2 in der Lage, seine Kontur durch Änderung der Winkelstellung der beiden Arme 2a, 2b zueinander zu verändern. Wenn der Bowdenzug 1 im Betrieb zunehmendes Spiel aufweist, so wird ein Befestigungspunkt 15 des Bowdenzuges 1 an dem ersten Betätigungselement bzw. Außenbetätigungshebel 2 von seiner Lage her in der Weise verändert, dass der zwischen den beiden Armen 2a, 2b eingeschlossene Winkel α spitzwinkliger wird.

Dadurch entfernt sich der Befestigungspunkt 15 von seiner ursprünglichen Position, wie dies in der Fig. 4 strichpunktiert angedeutet ist. Infolge dieser Verschiebung des Befestigungspunktes 15 wird der Abstand des Befestigungspunktes 15 für die Bowdenzugseele von der Bowdenzughülle vergrößert und der Bowdenzug 1 insgesamt (wieder) straff eingestellt. Das kann - wie gesagt - mit Hilfe der Verstelleinheit 12 oder des Verstellelementes 13 realisiert werden, die beide in der Weise arbeiten, dass bei zunehmendem Spiel des Bowdenzuges 1 der Winkel α zwischen den beiden Armen 2a, 2b verringert wird. Dabei liegt der Schlossarm 2a an dem zweiten Betätigungselement 3 an, wohingegen der Bowdenzugarm 2b den Befestigungspunkt 15 für den Bowdenzug 1 bzw. dessen Bowdenzugseele trägt.

Auch an anderer Stelle mag optional die bereits angesprochene Verstelleinheit 12 in Gestalt eines Exzenters oder Nockens zum Einsatz kommen. Das ist in der Fig. 3 dargestellt. Hier sorgt die Verstelleinheit 12 dafür, dass der Betätigungshaupthebel 3 sein Spiel gegenüber dem Auslösehebel 4 verringert. Das heißt, die Verstelleinheit 12 verändert die Größe des Spaltes S2. Selbstverständlich ist es denkbar, weitere Verstelleinheiten 12 vorzusehen, die den übrigen Betätigungselementen 2, 3, 4 zugeordnet sind.

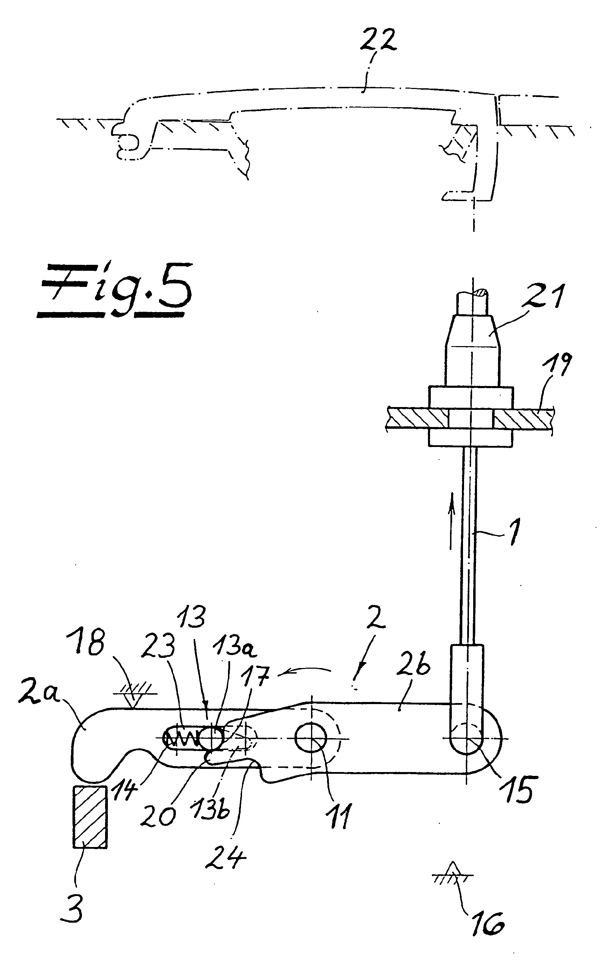

Im Rahmen des Ausführungsbeispiels gemäß Fig. 5 dient ein Bowdenzug 1, 21 aus Bowdenzugseele 1 und Bowdenzughülle 21 dazu, einen in einem Befestigungspunkt 15 angeschlossenen Betätigungshebel 2 um seine Drehachse 11 im Gegenuhrzeigersinn zu verschwenken.

Das heißt, Ziehbewegungen an der Bowdenzugseele 1 mit Hilfe eines angedeuteten Ziehgriffes 22 (Innenbetätigungs- oder Außenbetätigungshebel) führen entsprechend der Pfeildarstellung in Fig. 5 dazu, dass sich der an die Bowdenzugseele 1 im Befestigungspunkt 15 angeschlossene Betätigungshebel 2 im Gegenuhrzeigersinn um seine Drehachse 11 dreht. Dadurch arbeitet eine endseitige Nase des Betätigungshebels 2 auf den lediglich angedeuteten Betätigungshaupthebel 3.

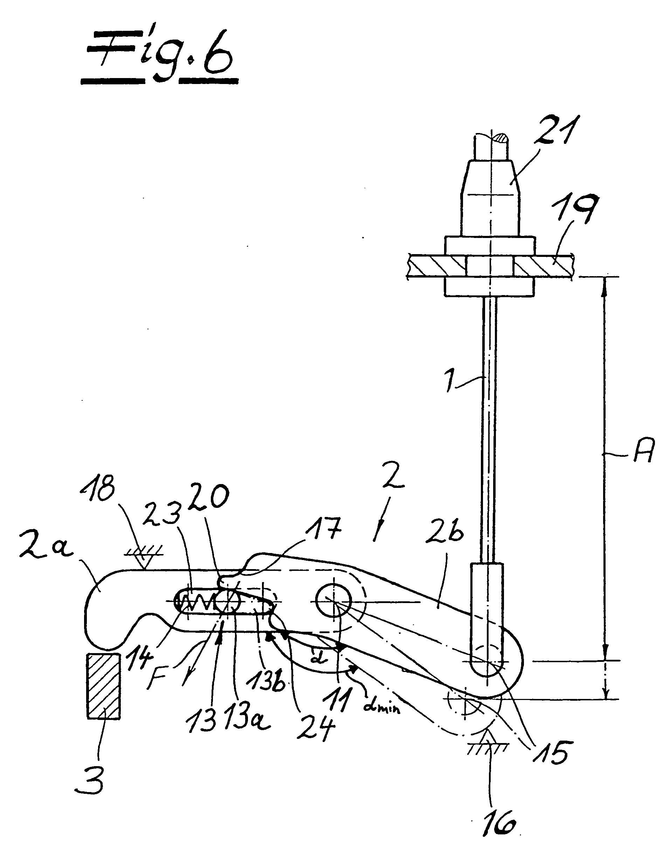

Der Betätigungshebel 2 verändert zum Spielausgleich des Bowdenzuges 1, 21 seine Kontur, wie man anhand der Fig. 6 erkennt. Das heißt, der Betätigungshebel 2 sorgt dafür, dass etwaige Längungen der Bowdenzugseele 1 im Betrieb automatisch ausgeglichen werden. Zu diesem Zweck sorgt der Betätigungshebel 2 dafür, dass der Abstand A zwischen dem Befestigungspunkt 15 für die Bowdenzugseele 1 und einem Anschlag 19 für die Bowdenzughülle 21 als Spielausgleich vergrößert wird. Hierzu ist der Betätigungshebel 2 zweiteilig mit Schlossarm 2a und Bodenzugarm 2b ausgeführt.

Tatsächlich verändern beide Arme 2a, 2b im Zuge des nachfolgend noch zu beschreibenden Spielausgleiches den zwischen sich eingeschlossenen Winkel α. Dazu sind beide Arme 2a, 2b drehgelenkig miteinander verbunden, und zwar über die Achse bzw. Drehachse 11 für den Betätigungshebel 2. Diese Drehachse 11 ist schlossfest bzw. gehäusefest angebracht.

Der Bowdenzugarm 2b verfügt über eine Nase 20, welche mit einem Gegenelement 13 am Schlossarm 2a zusammenwirkt. Das Gegenelement 13 ist im Rahmen des Ausführungsbeispiels zweiteilig aufgebaut und setzt sich aus einer Kugel 13a und einer lediglich angedeuteten und optionalen sowie angeschlossenen Führungsspitze 13b zusammen. Kugel 13a und Führungsspitze 13b lassen sich in Längsrichtung des Schlossarmes 2a in einer Ausnehmung 23 verschieben und werden von einer Feder 14 in Richtung auf die Nase 20 am Bowdenzugarm 2b beaufschlagt.

Die Nase 20 sorgt in Verbindung mit dem Gegenelement 13 für die Kraftübertragung vom Bowdenzug 1, 21 auf den Betätigungshaupthebel 3. Das wird durch einen Kraftpfeil F in der Fig. 6 angedeutet. Die Führungsspitze 13b und folglich die Position der Kugel 13a bzw. des Gegenelementes 13 in der Führung 23 im Schlossarm 2a wird von einer Führungskontur 24 am Bowdenzugarm 2b vorgegeben. In der Arbeitsstellung nach Fig. 6 erkennt man, dass die Führungsspitze 13b bzw. das Gegenelement 13 durch die Kraft der Feder 14 an der betreffenden Kontur 24 anliegt, die über einen mit abnehmendem Winkel α nach innen gekrümmten Bereich verfügt. Je nach Winkelstellung der Arme 2a, 2b zueinander verändert die betreffende Führungskontur 24 über die Führungsspitze 13b die Position des Gegenelementes 13a.

Längt sich die Bowdenzugseeele 1 infolge der Benutzung des Bowdenzug-/Hebelaggregates, so dringt die Führungsspitze 13b bzw. das Gegenelement 13 infolge der Kraft der Feder 14 zunehmend in innere Bereiche der Führungskontur 24 ein. Dadurch verkleinert sich der Winkel α, wie die strichpunktierte Darstellung in Fig. 6 andeutet. Diese Vorgehensweise hat gleichzeitig zur Folge, das der Abstand A zwischen dem Befestigungspunkt 15 und dem Anschlag 19 ebenfalls anwächst. Das geschieht solange, bis die Bowdenzugseele 1 (wieder) straff gespannt ist.

Ziehbewegungen am Bowdenzug 1, 21 werden durch diesen Vorgang ersichtlich nicht behindert. Denn die Kraftübertragung erfolgt von der Bowdenzugseele 1 über den Befestigungspunkt 15 unter Berücksichtigung der Drehachse 11 über die Nase 20 schließlich auf das Gegenelement 13 sowie folglich den Schlossarm 2a und somit den Betätigungshaupthebel 3. Dabei ändert sich durch den beschriebenen Spielausgleich lediglich der Winkel der Nase 20 gegenüber dem Gegenelement 13 bzw. der Kugel 13a. Durch deren Gestalt bleiben die jeweiligen Anlageflächen gleich und auch die Reibungsverhältnisse. Das heißt, Änderungen der Betätigungskraft am Ziehgriff 22 sind nicht zu erwarten.

Schließlich sorgen noch zwei Anschläge 16, 18 dafür, dass zunächst einmal ein minimaler Winkel αₘᵢₙ zwischen den beiden Armen 2a, 2b nicht unterschritten wird. Das stellt der Anschlag 16 sicher. Dagegen sorgt der Anschlag 18 dafür, dass der Schlossarm 2a insgesamt nicht ausweichen kann und insbesondere ein Wechsel von der Bereitschaftsstellung nach Fig. 5 in die Arbeitsstellung nach Fig. 6 möglich ist.

In der Bereitschaftsstellung nach Fig. 5 wird das beschriebene Bowdenzug-/Hebelaggregat angeliefert. In diesem Zustand liegt das Gegenelement 13 bzw. dessen Kugel 13a an einer Anschlagkontur 17 oberhalb der Nase 20 an. Um nun den automatischen Spielausgleich in der Arbeitsstellung nach Fig. 6 in Gang zu setzen, ist es erforderlich, mit Hilfe der Nase 20 das Gegenelement 13 gegen die Kraft der Feder 14 zurückzuschieben, damit das Gegenelement 13 in die unterhalb der Nase 20 angeordnete Führungskontur 24 eingreifen kann.

Der Betätigungshebel 2 verändert in einem weiteren Ausführungsbeispiel zum Spielausgleich des Bowdenzuges 1, 21 seine Kontur, wie man anhand der Fig. 8 erkennt. Das heißt, der Betätigungshebel 2 sorgt dafür, dass etwaige Längungen der Bowdenzugseele 1 im Betrieb automatisch ausgeglichen werden. Zu diesem Zweck sorgt der Betätigungshebel 2 dafür, dass der Abstand A zwischen dem Befestigungspunkt 15 für die Bowdenzugseele 1 und einem Anschlag 19 für die Bowdenzughülle 21 als Spielausgleich vergrößert wird. Hierzu ist der Betätigungshebel 2 zweiteilig mit Schlossarm 2a und Bodenzugarm 2b ausgeführt. Tatsächlich verändern beide Arme 2a, 2b im Zuge des nachfolgend noch zu beschreibenden Spielausgleiches den zwischen sich eingeschlossenen Winkel α. Dazu sind beide Arme 2a, 2b drehgelenkig miteinander verbunden, und zwar über die Achse bzw. Drehachse 11 für den Betätigungshebel 2. Diese Drehachse 11 ist schlossfest bzw. gehäusefest angebracht.

Der Bowdenzugarm 2b verfügt über eine Nase 20, welche mit einem Gegenelement 13 am Schlossarm 2a zusammenwirkt. Das Gegenelement 13 ist im Rahmen des Ausführungsbeispiels einteilig aufgebaut und besteht aus einer Kugel 13a. Diese Kugel 13a lässt sich in Längsrichtung des Schlossarmes 2a in einer Ausnehmung 23 verschieben und wird von einer Feder 14 in Richtung auf die Nase 20 am Bowdenzugarm 2b beaufschlagt.

Die Nase 20 sorgt in Verbindung mit dem Gegenelement 13 für die Kraftübertragung vom Bowdenzug 1, 21 auf den Betätigungshaupthebel 3. Die Position der Kugel 13a bzw. des Gegenelementes 13 in der Führung 23 im Schlossarm 2a wird von einer diskreten Führungskontur 24 in Form einer Stufenkontur am Bowdenzugarm 2b vorgegeben. In der Arbeitsstellung nach Fig. 8 erkennt man, dass das Gegenelement 13 durch die Kraft der Feder 14 an der betreffenden Kontur 24 anliegt. Je nach Winkelstellung der Arme 2a, 2b zueinander verändert die betreffende Führungskontur 24 über die Stufenkontur die Position des Gegenelementes 13a.

Diese Vorgehensweise hat gleichzeitig zur Folge, dass der Abstand A zwischen dem Befestigungspunkt 15 und dem Anschlag 19 ebenfalls anwächst. Das geschieht solange, bis die Bowdenzugseele 1 (wieder) straff gespannt ist.

Ziehbewegungen am Bowdenzug 1, 21 werden durch diesen Vorgang ersichtlich nicht behindert. Denn die Kraftübertragung erfolgt von der Bowdenzugseele 1 über den Befestigungspunkt 15 unter Berücksichtigung der Drehachse 11 über die Nase 20 schließlich auf das Gegenelement 13 sowie folglich den Schlossarm 2a und somit den Betätigungshaupthebel 3. Dabei ändert sich durch den beschriebenen Spielausgleich lediglich der Winkel der Nase 20 gegenüber dem Gegenelement 13 bzw. der Kugel 13a. Änderungen der Betätigungskraft am Ziehgriff 22 sind nicht zu erwarten.

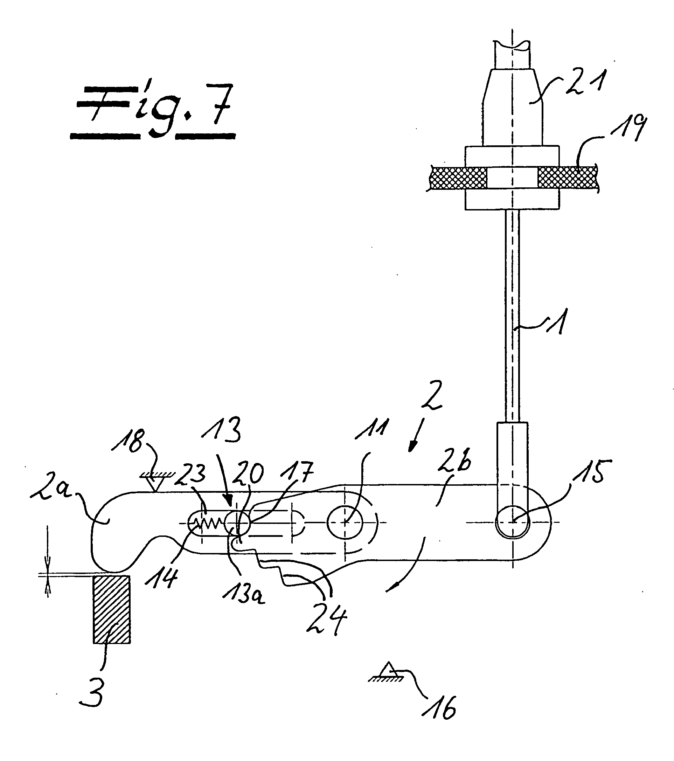

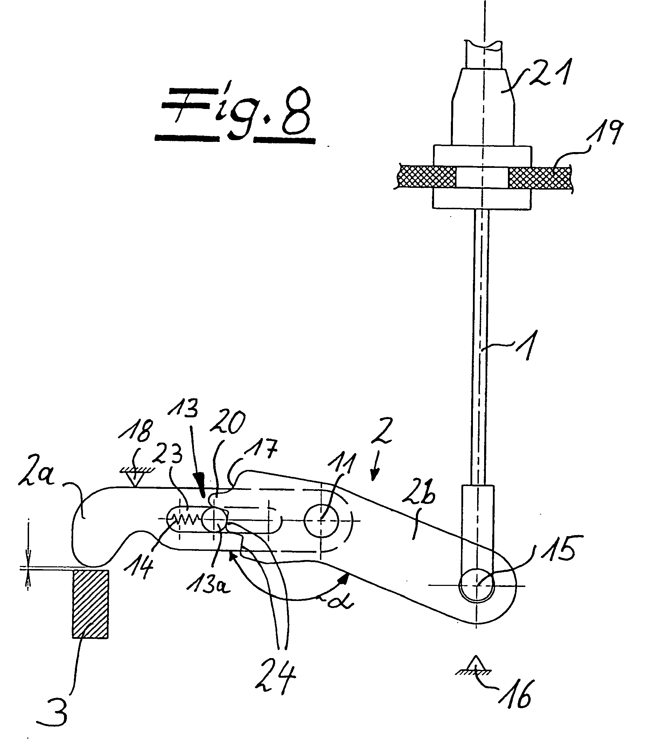

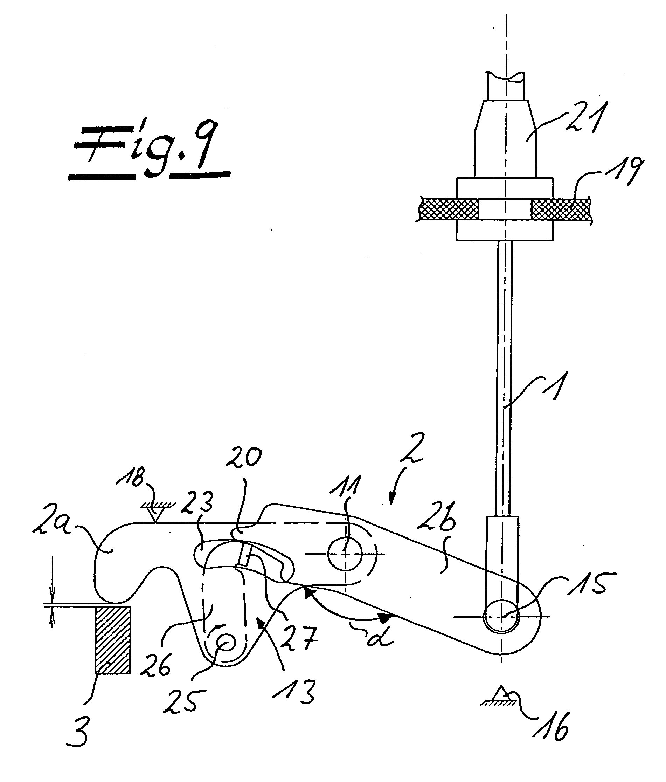

Schließlich sorgen noch zwei Anschläge 16, 18 dafür, dass zunächst einmal ein minimaler Winkel zwischen den beiden Armen 2a, 2b nicht unterschritten wird. Das stellt der Anschlag 16 sicher. Dagegen sorgt der Anschlag 18 dafür, dass der Schlossarm 2a insgesamt nicht ausweichen kann und insbesondere ein Wechsel von der Bereitschaftsstellung nach Fig. 7 in die Arbeitsstellung nach Fig. 8 möglich ist.

In der Bereitschaftsstellung nach Fig. 7 wird das beschriebene Bowdenzug-/Hebelaggregat angeliefert. In diesem Zustand liegt das Gegenelement 13 bzw. dessen Kugel 13a an einer Anschlagkontur 17 oberhalb der Nase 20 an. Um nun den automatischen Spielausgleich in der Arbeitsstellung nach Fig. 8 in Gang zu setzen, ist es erforderlich, mit Hilfe der Nase 20 das Gegenelement 13 gegen die Kraft der Feder 14 zurückzuschieben, damit das Gegenelement 13 in die unterhalb der Nase 20 angeordnete Führungskontur 24 eingreifen kann.

In einem weiteren Ausführungsbeispiel gemäß Fig. 9 verändert der Betätigungshebel 2 zum Spielausgleich des Bowdenzuges 1, 21 seine Kontur. Hierzu ist der Betätigungshebel 2 zweiteilig mit Schlossarm 2a und Bowdenzugarm 2b ausgeführt.

Tatsächlich verändern beide Arme 2a, 2b im Zuge des nachfolgend noch zu beschreibenden Spielausgleiches den zwischen sich eingeschlossenen Winkel α. Dazu sind beide Arme 2a, 2b drehgelenkig miteinander verbunden, und zwar über die Achse bzw. Drehachse 11 für den Betätigungshebel 2. Diese Drehachse 11 ist schlossfest bzw. gehäusefest angebracht.

Der Bowdenzugarm 2b verfügt über eine Nase 20, welche mit einem Gegenelement 13 am Schlossarm 2a zusammenwirkt. Das Gegenelement 13 ist im Rahmen des Ausführungsbeispiels als ein auf dem Schlossarm 2a um einen Drehpunkt 25 drehbar befestigter Führungshebel 26 mit einem Führungselement 27 aufgebaut und lässt sich in Richtung des Schlossarmes 2a in einer Ausnehmung 23 verschieben und wird von einer nicht dargestellten Feder in Richtung auf die Nase 20 am Bowdenzugarm 2b beaufschlagt.

Die Nase 20 sorgt in Verbindung mit dem Gegenelement 13 für die Kraftübertragung vom Bowdenzug 1, 21 auf den Betätigungshaupthebel 3. Die Position des Gegenelementes 13 in der Führung 23 im Schlossarm 2a wird von einer Führungskontur 24 am Bowdenzugarm 2b vorgegeben. In der Arbeitsstellung nach Fig. 9 erkennt man, dass das Gegenelement 13 durch die Kraft der Feder an der betreffenden Kontur 24 anliegt, die über einen mit abnehmendem Winkel α nach innen gekrümmten Bereich verfügt. Je nach Winkelstellung der Arme 2a, 2b zueinander verändert die betreffende Führungskontur 24 die Position des Gegenelementes 13a.

Längt sich die Bowdenzugseele 1 infolge der Benutzung des Bowdenzug-/Hebelaggregates, so dringt das Gegenelement 13 infolge der Kraft der Feder zunehmend in innere Bereiche der Führungskontur 24 ein. Dadurch vergrößert sich der Winkel α, wie die strichpunktierte Darstellung in Fig. 6 andeutet. Diese Vorgehensweise hat gleichzeitig zur Folge, dass der Abstand A zwischen dem Befestigungspunkt 15 und dem Anschlag 19 ebenfalls anwächst. Das geschieht solange, bis die Bowdenzugseele 1 (wieder) straff gespannt ist.

Ziehbewegungen am Bowdenzug 1, 21 werden durch diesen Vorgang ersichtlich nicht behindert. Denn die Kraftübertragung erfolgt von der Bowdenzugseele 1 über den Befestigungspunkt 15 unter Berücksichtigung der Drehachse 11 über die Nase 20 schließlich auf das Gegenelement 13 sowie folglich den Schlossarm 2a und somit den Betätigungshaupthebel 3. Dabei ändert sich durch den beschriebenen Spielausgleich lediglich der Winkel der Nase 20 gegenüber dem Gegenelement 13. Durch deren Gestalt bleiben die jeweiligen Anlageflächen gleich und auch die Reibungsverhältnisse. Das heißt, Änderungen der Betätigungskraft am Ziehgriff 22 sind nicht zu erwarten.

Schließlich sorgen noch zwei Anschläge 16, 18 dafür, dass zunächst einmal ein minimaler Winkel zwischen den beiden Armen 2a, 2b nicht unterschritten wird. Das stellt der Anschlag 16 sicher. Dagegen sorgt der Anschlag 18 dafür, dass der Schlossarm 2a insgesamt nicht ausweichen kann.

## Patentansprüche

1. Kombiniertes Bowdenzug-/Hebelaggregat für insbesondere Kraftfahrzeugtürverschlüsse, mit einem Bowdenzug (1, 21) sowie einer daran angeschlossenen Betätigungselementekette (2, 3, 4, 5) mit erstem Betätigungselement (2), zweiten Betätigungselement (3) und drittem Betätigungselement (4), wobei die Betätigungselementekette (2, 3, 4, 5) drei oder mehr durch einen Arbeitshub des Bowdenzuges (1) bis zur Beaufschlagung eines Auslöse-/Sperrelementes (6, 7) zu überbrückende Spalte (S1, S2, S3) aufweist, **dadurch gekennzeichnet, dass** das dritte Betätigungselement (4) im Wesentlichen spielfrei auf das Auslöse-/Sperrelement (6, 7) arbeitet, so dass mittels des ersten Betätigungselementes (2) das noch verbleibende Spiel in der Betätigungselementekette (2, 3, 4, 5) eingestellt wird.

2. Bowdenzug-/Hebelaggregat nach Anspruch 1, **dadurch gekennzeichnet, dass** das dritte Betätigungselement (4) eine endseitige Ummantelung (9), insbesondere Kunststoffummantelung (9), zwischen dem betreffenden Betätigungselement (4) und dem Auslöse-/Sperrelement (6, 7) aufweist.

3. Bowdenzug-/Hebelaggregat nach Anspruch 1 oder 2, **dadurch gekennzeichnet, dass** dritte Betätigungselement (4) endseitig einerseits an einem gehäusefesten Anschlag (10) und andererseits an dem Auslöse-/Sperrelement (6, 7) anliegt.

4. Bowdenzug-/Hebelaggregat nach einem der Ansprüche 1 bis 3, **dadurch gekennzeichnet, dass** wenigstens ein Betätigungselement (2) der Betätigungselementekette (2, 3, 4, 5) zum Spielausgleich für den Bowdenzug (1, 21) nach einer Grundeinstellung seine Kontur verändert.

5. Bowdenzug-/Hebelaggregat nach Anspruch 4, **dadurch gekennzeichnet, dass** das betreffende Betätigungselement (2) zweiteilig mit Schlossarm (2a) und Bowdenzugarm (2b) ausgebildet ist, wobei beide Arme (2a, 2b) drehgelenkig über eine Drehachse (11) miteinander verbunden sind.

6. Bowdenzug-/Hebelaggregat nach Anspruch 4 und 5, **dadurch gekennzeichnet, dass** das Betätigungselement (2) seine Kontur in der Weise verändert, dass der Abstand (A) zwischen dem Befestigungspunkt (15) für die Bowdenzugseele (1) und einem Anschlag (19) für die Bowdenzughülle (2) als Spielausgleich variiert wird.

7. Bowdenzug-/Hebelaggregat nach einem der Ansprüche 4 bis 6, **dadurch gekennzeichnet, dass** der Bowdenzugarm (4) eine Nase (20) aufweist, welche in Verbindung mit einem je nach Winkelstellung (α) der Arme (2a, 2b) zueinander verstellbarem Gegenelement (13) für die Kraftübertragung vom Bowdenzug (1, 2) auf das Betätigungselement 3 oder einen vergleichbaren Ausgangsmechanismus sorgt.

8. Bowdenzug-/Hebelaggregat nach einem der Ansprüche 4 bis 7, **dadurch gekennzeichnet, dass** das Gegenelement (13) als im Schlossarm (2a) verschiebbar gelagerte Kugel (13a) mit gegebenenfalls angeschlossener Führungsspitze (13b), ausgeführt ist.

9. Bowdenzug-/Hebelaggregat nach einem der Ansprüche 4 bis 7, **dadurch gekennzeichnet, dass** das Gegenelement (13) im Schlossarm (2a) drehbarer Führungshebel (26) ausgeführt ist.

10. Bowdenzug-/Hebelaggregat nach einem der Ansprüche 4 bis 9, **dadurch gekennzeichnet, dass** das Gegenelement (13) am Schlossarm (2a) mit einer Führungskontur (24) am Bowdenzugarm (2b) zusammenwirkt.

11. Bowdenzug-/Hebelaggregat nach einem der Ansprüche 4 bis 10, **dadurch gekennzeichnet, dass** je nach Winkelstellung (α) der Arme (2a, 2b) zueinander die Führungskontur (24) die Position des Gegenelementes (13) verändert.

12. Bowdenzug-/Hebelaggregat nach einem der Ansprüche 4 bis 11, **dadurch gekennzeichnet, dass** mehrere Anschläge (16, 18) für den Betätigungshebel (2) vorgesehen sind.

13. Bowdenzug-/Hebelaggregat nach einem der Ansprüche 4 bis 12, **dadurch gekennzeichnet, dass** der Betätigungshebel (4) im Anlieferungszustand (Fig. 5) ohne Spielausgleich arbeitet und erst im Arbeitszustand (Fig. 6) den automatischen Spielausgleich vornimmt.

## Claims

1. Combined Bowden cable/lever unit for, in particular, motor vehicle door locks, comprising a Bowden cable (1, 21) with a connected operating element chain (2, 3, 4, 5) with a first operating element (2), a second operating element (3) and a third operating element (4), with the operating element chain (2, 3, 4, 5) containing three or more gaps (S1, S2, S3) to be bridged by a working stroke of the Bowden cable (1) until a release/blocking element (6, 7) is acted upon, **characterized in that** the third operating element (4) acts essentially without play on the release/blocking element (6, 7) so that the play remaining in the operating element chain (2, 3, 4, 5) is set with the aid of the first operating element (2).

2. Bowden cable/lever unit according to claim 1, **characterized in that** the third operating element (4) contains a cover (9) at its end, in particular a plastic cover (9), between the operating element (4) and the release/blocking element (6, 7).

3. Bowden cable/lever unit according to claims 1 or 2, **characterized in that** the third operating element (4) lies with its end against a stop (10) fixed to the housing, on one hand and against the release/blocking element (6, 7), on the other hand.

4. Bowden cable/lever unit according to claims 1 to 3, **characterized in that** at least one operating element (2) of the operating element chain (2, 3, 4, 5) changes its contour after a basic set-up in order to compensate for the play of the Bowden cable (1,21).

5. Bowden cable/lever unit according to claim 4, **characterized in that** the respective operating element (2) comprises two parts, the latch arm (2a) and the Bowden cable arm (2b), with both arms (2a, 2b) being hinged together by means of a hinge pin (11).

6. Bowden cable/lever unit according to claims 4 and 5, **characterized in that** the operating element (2) changes its contour in such a way that the distance (A) between the fixing point (15) for the Bowden cable core (1) and a stop (19) for the Bowden cable sleeve (2) is changed to compensate for the play.

7. Bowden cable/lever unit according to one of the claims 4 to 6, **characterized in that** the Bowden cable arm (4) contains a catch (20), which together with a counter element (13), adjustable depending on the angled position (a) of the arms (2a, 2b) to each other, provides the transfer of the force from the Bowden cable (1, 2) to the operating element 3 or a comparable output mechanism.

8. Bowden cable/lever unit according to one of the claims 4 to 7, **characterized in that** the counter element (13) is designed as a ball (13a) displaceably arranged in the latch arm (2a) with a connected guide tip (13b), where applicable.

9. Bowden cable/lever unit according to one of the claims 4 to 7, **characterized in that** the counter element (13) contains a guide lever (26) arranged rotatably in latch arm (2a).

10. Bowden cable/lever unit according to one of the claims 4 to 9, **characterized in that** the counter element (13) on latch arm (2a) cooperates with a guide contour (24) on the Bowden cable arm (2b).

11. Bowden cable/lever unit according to one of the claims 4 to 10, **characterized in that** the guide contour (24) changes the position of the counter element (13) depending on the position (a) arms (2a, 2b) are angled to each other.

12. Bowden cable/lever unit according to one of the claims 4 to 11, **characterized in that** several stops (16, 18) are provided for the operating lever (2).

13. Bowden cable/lever unit according to one of the claims 4 to 12, **characterized in that** the operating lever (4) operates with out any compensation of play in its supplied state (Fig. 5) and only carries out the automatic compensation of play in its operating state (Fig. 6).

## Revendications

1. Agrégat combiné câble bowden/levier pour en particulier des fermetures de porte de véhicule, avec un câble bowden (1, 21) ainsi qu'une chaîne d'éléments d'actionnement (2, 3, 4, 5) y étant associée, avec un premier élément d'actionnement (2), un deuxième élément d'actionnement (3) et un troisième élément d'actionnement (4), la chaîne d'éléments d'actionnement (2, 3, 4, 5) présentant trois ou plus de fentes (S1, S2, S3) à ponter par une course de travail du câble bowden (1) jusqu'à l'excitation d'un élément de déclenchement/de blocage (6, 7) **caractérisé en ce que** le troisième élément d'actionnement (4) fonctionne pour l'essentiel sans jeu sur l'élément de déclenchement/de blocage (6, 7) de façon que le premier élément d'actionnement (2) règle le jeu restant dans la chaîne d'éléments d'actionnement (2, 3, 4, 5).

2. Agrégat câble bowden /levier selon la revendication 1 **caractérisé en ce que** le troisième élément d'actionnement (4) présente une gaine (9) côté extrémité, en particulier une gaine (9) en plastique entre l'élément d'actionnement (4) concerné et l'élément de déclenchement/de blocage (6, 7).

3. Agrégat câble bowden /levier selon la revendication 1 ou 2 **caractérisé en ce que** le troisième élément d'actionnement (4) pose côté extrémité, d'une part, sur une butée fixée au boîtier (10) et, d'autre part, à l'élément de déclenchement/de blocage (6, 7).

4. Agrégat câble bowden /levier selon l'une des revendications 1 à 3 **caractérisé en ce qu'**au moins un élément d'actionnement (2) de la chaîne d'éléments d'actionnement (2, 3, 4, 5) modifie son contour pour compenser le jeu du câble bowden (1, 21) après une position initiale.

5. Agrégat câble bowden /levier selon la revendication 4 **caractérisé en ce que** l'élément d'actionnement (2) concerné est formé de deux parties avec bras de serrure (2a) et bras de câble bowden (2b), les deux bras (2a, 2b) étant reliés entre eux par articulation rotative par l'intermédiaire d'un axe rotatif (11).

6. Agrégat câble bowden /levier selon les revendications 4 et 5 **caractérisé en ce que** l'élément d'actionnement (2) modifie son contour de façon que la distance (A) entre le point de fixation (15) pour l'élément de câble bowden (1) et une butée (19) pour l'enveloppe de câble bowden (2) varie pour compenser le jeu.

7. Agrégat câble bowden /levier selon l'une des revendications 4 à 6 **caractérisé en ce que** le bras de câble bowden (4) présente un taquet (20) qui, en relation avec un contre-élément (13) par position d'angle (α) des bras (2a, 2b) réglables entre eux, assure la transmission d'effort du câble bowden (1, 2)) vers l'élément d'actionnement 3 ou un mécanisme de sortie comparable.

8. Agrégat câble bowden /levier selon l'une des revendications 4 à 7 **caractérisé en ce que** le contre-élément (13) est formé comme une bille (13a) logée de façon à pouvoir être déplacée dans le bras de serrure (2a) avec, le cas échéant, une pointe de guidage (13b) associée.

9. Agrégat câble bowden /levier selon l'une des revendications 4 à 7 **caractérisé en ce que** le contre-élément (13) au bras de serrure (2a) est exécuté comme levier de guidage (26) rotatif.

10. Agrégat câble bowden /levier selon l'une des revendications 4 à 9 **caractérisé en ce que** le contre-élément (13) au bras de serrure (2a) concourt avec un contour de guidage (24) situé au bras de câble bowden (2b).

11. Agrégat câble bowden /levier selon l'une des revendications 4 à 10 **caractérisé en ce que** selon la position d'angle (α) des bras (2a, 2b) l'un par rapport à l'autre, le contour de guidage (24) modifie la position du contre-élément (13).

12. Agrégat câble bowden /levier selon l'une des revendications 4 à 11 **caractérisé en ce que** plusieurs butées (16, 18) sont prévus pour le levier d'actionnement (2).

13. Agrégat câble bowden /levier selon l'une des revendications 4 à 12 **caractérisé en ce que** le levier d'actionnement (4) fonctionne à l'état de livraison (Fig. 5) sans compensation de jeu et ne procède à la compensation de jeu automatique qu'à l'état de travail (Fig. 6).
